# EUROPEAN PATENT SPECIFICATION

(11) **EP 3 637 699 B1**
(45) Date of publication and mention of the grant of the patent: **08.03.2023**
(21) Application number: 18813690.7
(22) Date of filing: 05.06.2018
(51) Int. Cl.: H04L 41/12, H04L 41/122, H04L 41/5041

(54) **METHOD AND DEVICE FOR PUBLISHING NETWORK ROUTE**
VERFAHREN UND VORRICHTUNG ZUR VERÖFFENTLICHUNG EINER NETZWERKROUTE
PROCÉDÉ ET DISPOSITIF DE PUBLICATION D'UNE ROUTE DE RÉSEAU

(30) Priority: 05.06.2017 CN 201710415056
(43) Date of publication of application: 15.04.2020
(73) Proprietor: ZTE Corporation, Shenzhen, Guangdong 518057 (CN)
(72) Inventor: SHI, Haohong, Shenzhen, Guangdong 518057 (CN)
(74) Representative: Petraz, Gilberto Luigi
(86) International application number: PCT/CN2018/089906
(87) International publication number: WO 2018/223945

(56) References cited:
- CN-A- 104 104 531
- CN-A- 105 337 870
- CN-A- 105 681 202
- US-A1- 2015 109 955
- US-A1- 2016 248 658
- US-B1- 6 910 090
- US-B1- 9 246 804

## Description

### Field of the Invention

The present disclosure relates to the technical field of data communication, and in particular, to a method and device for publishing a network route.

### Background of the Invention

Nowadays, a method for implementing L3VPN (L3 Virtual Private Network) route publishing is a distributed architecture-based MP-BGP (Multiprotocol-Border Gateway Protocol) in the field of routers. By configuring a neighbor relation between PE (Provider Edge) nodes, each PE node can learn from IGP (Interior Gateway Protocol), or a local route configured in a static manner can be published to other PE nodes. Since the configuration of neighbor relation is shared among L3VPN instances, in order to control whether each L3VPN instance publishes a route between a pair of neighbors, an RT (Route Target) technique is introduced in L3VPN configuration. Only when the L3VPN instances of two neighbors have the same RT value, can they publish routes to each other. This publishing technique has many years of mature experience in router products; however, the configuration is complex, it is difficult to locate problems, the protocol model is solidified, and the scheme updating and deployment cycle is long. Such publishing technique is inconsistent with the current SDN (Software Defined Network) centralized controller plane, and needs to be supported by a route reflector technique especially in the case of complex topologies, and the entire scheme is more complicated.

US 2016/248658 A1 discloses a method for providing optimal route reflector (ORR) root address assignment to route reflector clients and fast failover capabilities in an autonomous system, including identifying a first node in an autonomous system as a candidate root node of a first routing group, identifying a client node based on a neighbor address used in a first routing protocol, mapping the neighbor address to routing information received from the client node via a second routing protocol, and associating the neighbor address with the first routing group if the routing information includes an identifier of the first routing group. In more specific embodiments, identifying the first node as a candidate root node includes determining the first node and the first routing group are advertised in a first protocol packet, and determining the first node and the second routing group are advertised in a second protocol packet.

### Summary of the Invention

The present invention is defined in the appended independent claims to which reference should be made. Advantageous features are set out in the appended dependent claims.

After reading and understanding the drawings and detailed description, other aspects can be understood.

### Brief Description of the Drawings

Fig. 1 is a flowchart of a method for publishing a network route provided in an embodiment of the present disclosure;
Fig. 2 is a schematic diagram of a device for publishing a network route provided in an embodiment of the present disclosure;
Fig. 3 shows an overall architecture of static network route publishing provided in an embodiment of the present disclosure;
Fig. 4 is a networking diagram of a first example of static network route publishing provided in an embodiment of the present disclosure; and
Fig. 5 is a networking diagram of a second example of static network route publishing provided in an embodiment of the present disclosure.

### Detailed Description of the Embodiments

Exemplary embodiments of the present disclosure will be described in detail below with reference to the accompanying drawings. It should be understood that the exemplary embodiments described below are only for illustrating and explaining the present disclosure rather than limiting the present disclosure.

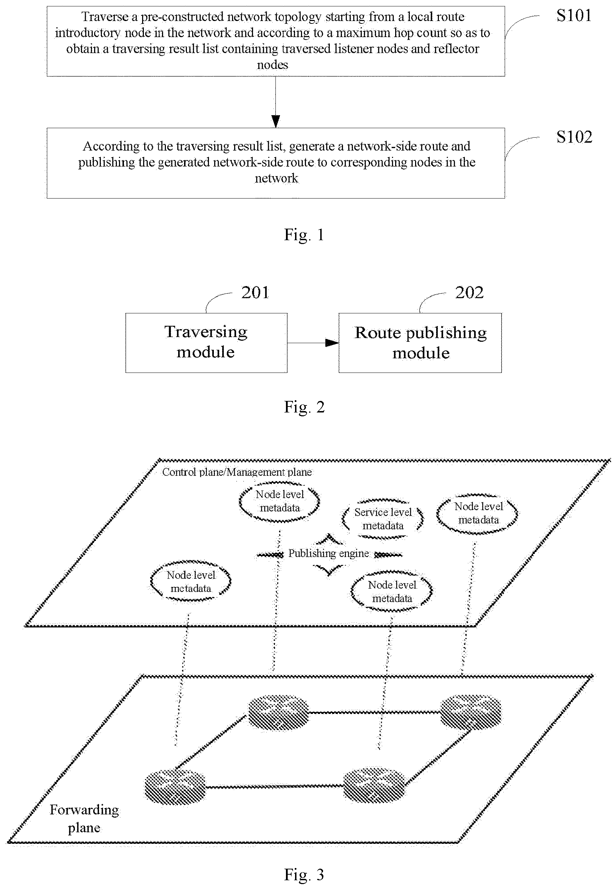

Fig. 1 is a flowchart of a method for publishing a network route provided in an embodiment of the present disclosure. As shown in Fig. 1, the method includes a step S101 and a step S102.

In step S101, a pre-constructed network topology is traversed starting from a local route introductory node in the network and according to a maximum hop count so as to obtain a traversing result list containing traversed listener nodes and reflector nodes.

In step S102, a network-side route is generated according to the traversing result list, and the generated network-side route is published to corresponding nodes in the network.

The network topology includes a plurality of nodes, the plurality of nodes including core nodes and edge nodes.

The maximum hop count is configured through service level metadata, listener nodes are configured for each core node and for each edge node through node level metadata, and reflector nodes are configured for each core node through node level metadata.

Traversing a pre-constructed network topology starting from a local route introductory node in the network and according to a maximum hop count so as to obtain a traversing result list containing traversed listener nodes and reflector nodes includes: traversing each of network branches of the network topology successively in a hop-by-hop manner, starting from the local route introductory node; when traversing each of the network branches of the network topology, if it is determined that a traversed node is a listener node of the local route introductory node, recording the traversed node into the traversing result list, and completing traversing according to whether the listener node is a reflector node and whether the maximum hop count is reached; and when traversing each of the network branches of the network topology, if it is determined that the traversed node is not a listener node of the local route introductory node, stopping traversing.

Completing traversing according to whether the listener node is a reflector node and whether the maximum hop count is reached includes: determining whether the listener node is a reflector node; if it is determined that the listener node is a reflector node, continuing traversing starting from the reflector node, and recording traversed listener nodes of the reflector node into the traversing result list until the maximum hop count is reached; and if it is determined that the listener node is not a reflector node, stopping traversing.

Publishing the generated network-side route to corresponding nodes in the network includes: if the local route introductory node is an edge node, publishing the generated network-side route to all the core nodes in the network; and if the local route introductory node is a core node, publishing the generated network-side route to all core nodes in the network other than the core node serving as the introductory node and to an edge node directly neighboring the core node serving as the introductory node.

Fig. 2 is a schematic diagram of a device for publishing a network route provided in an embodiment of the present disclosure. As shown in Fig. 2, the device includes a traversing module 201 and a route publishing module 202. The traversing module 201 is configured to traverse a pre-constructed network topology starting from a local route introductory node in the network and according to a maximum hop count so as to obtain a traversing result list containing traversed listener nodes and reflector nodes. The route publishing module 202 is configured to generate a network-side route according to the traversing result list and to publish the generated network-side route to corresponding nodes in the network.

The network topology includes a plurality of nodes, the plurality of nodes including core nodes and edge nodes.

The maximum hop count is configured through service level metadata, listener nodes are configured for each core node and for each edge node through node level metadata, and reflector nodes are configured for each core node through node level metadata.

The traversing module 201 includes a traversing unit, the traversing unit being configured to traverse each of network branches of the network topology successively in a hop-by-hop manner, starting from the local route introductory node in the network; to record the traversed node into the traversing result list if it is determined that a traversed node is a listener node of the local route introductory node when traversing each of the network branches of the network topology, and complete traversing according to whether the listener node is a reflector node and whether the maximum hop count is reached; and to stop traversing if it is determined that the traversed node is not a listener node of the local route introductory node when traversing each of the network branches of the network topology.

Fig. 3 shows an overall architecture of static network route publishing provided in an embodiment of the present disclosure. As shown in Fig. 3, the overall architecture functionally consists of two parts: metadata and a publishing engine.

The metadata is divided into two parts: node level metadata and service level metadata. The node level metadata is in one-to-one correspondence with a core node or an edge node, and the node level metadata is configured for each core node or each edge node to describe policy control of the node during a route publishing process. Only one piece of service level metadata is configured for an entire L3VPN to describe the publishing policy of an entire service. For example, the node level metadata includes whether it is a reflector node or not, an upstream node list, a downstream node list, a listener node list, and IP FRR (Internet Protocol Fast Reroute) switches. The service level metadata mainly includes a maximum hop count for route publishing.

The publishing engine is the main implementation part of the entire route publishing device. There is a fixed publishing algorithm, and during the execution of the publishing algorithm, the publishing engine will read metadata information and fine-tune the publishing process according to policies recorded in the metadata information so as to adapt to different application scenarios. When the application scenario changes, the publishing engine is not upgraded, but only the configuration of the metadata is modified to complete the deployment of a new publishing process.

The publishing engine is restricted by the above metadata during the route publishing process as follows.
1) First, a network topology is constructed with PE nodes of an L3VPN being vertexes and with a peer binding relationship being edges.
2) A breadth-first traversal is performed starting from a local route introductory node and on the basis of the topology. During the traversal, a hop count is counted, and it is determined at any time whether a maximum hop count set in the service level metadata is reached. If the maximum hop count is reached, "the traversal of the current branch is stopped, and the traversal of other branches is continued according to a breadth-first principle; if all branches are traversed, the algorithm is stopped".
3) Each time a node is reached during the traversal, before deciding whether to continue the traversal, it is determined whether the node is a listener node of the starting node; if not, the node does not appear in the traversing result, "the traversal of the current branch is stopped, and the traversal of other branches is continued according to the breadth-first principle; if all branches are traversed, the algorithm is stopped".
4) Each time a node is reached in the traversal, before deciding whether to continue the traversal, it is determined whether the node is a reflector. If the node is not a reflector, "the traversal of the current branch is stopped, and the traversal of other branches is continued according to the breadth-first principle; if all branches are traversed, the algorithm is stopped". If the node is a reflector, it is determined whether a previous node is an upstream node of the reflector. If the previous node is not an upstream node of the reflector, "the traversal of the current branch is stopped, and the traversal of other branches is continued according to the breadth-first principle; if all branches are traversed, the algorithm is stopped". If the previous node is an upstream node of the reflector, the traversal is continued. Note: The starting node does not need to be a reflector.
5) When a neighboring node is traversed along a reflector during the traversal, it is also determined whether the neighboring node is a downstream node of the reflector. If so, the node is traversed; otherwise, the node is not traversed and other nodes are continued to be attempted. (Note: If the upstream node list is empty in the metadata, it means that all neighboring nodes can be upstream nodes of the reflector node; the same is true for downstream nodes.)
6) During the traversal, each time a node is traversed, one upstream node is recorded, and the same upstream nodes do not need to be repeatedly recorded. In addition, the hop count from the starting node to the node is recorded. When the same upstream nodes are merged, the hop count takes a smaller value.
7) In the case where a local route is introduced from two nodes, the above process is repeated twice with each of the two nodes as a starting node.
8) The output of the traversal is a sub topology of the original topology. Each node in the sub topology is a candidate node where a network-side route is to be generated. The starting nodes are special. If there are two starting nodes and the IP FRR switches thereof are turned on, network-side routes are also generated on the starting nodes; otherwise, no new route is generated on the starting nodes except for the local route entered by the algorithm.
9) Network-side routes are generated on other nodes according to the number of recorded upstream nodes.
10) For an active-standby mode, an active network-side route and a standby network-side route are respectively generated on two selected upstream nodes with the smallest hop count. The active/standby route is determined according to a certain principle (a hash algorithm) or by an externally-introduced active-standby role list.

The above solution of the embodiment of the present disclosure can also be extended to the publishing of public network IP routes without an L3VPN. The structure of the entire device is still composed of metadata and a publishing engine, wherein service level metadata shall be replaced with network level metadata, and only one piece of network level metadata is configured for the entire network. The publishing engine may not construct the network topology on the basis of the peer tunnel binding relation; rather, the publishing engine may construct the network topology on the basis of the peer configuration between network nodes or other configurations indicating the connection relations between nodes, which all can be incorporated into the application range of the embodiment of the present disclosure.

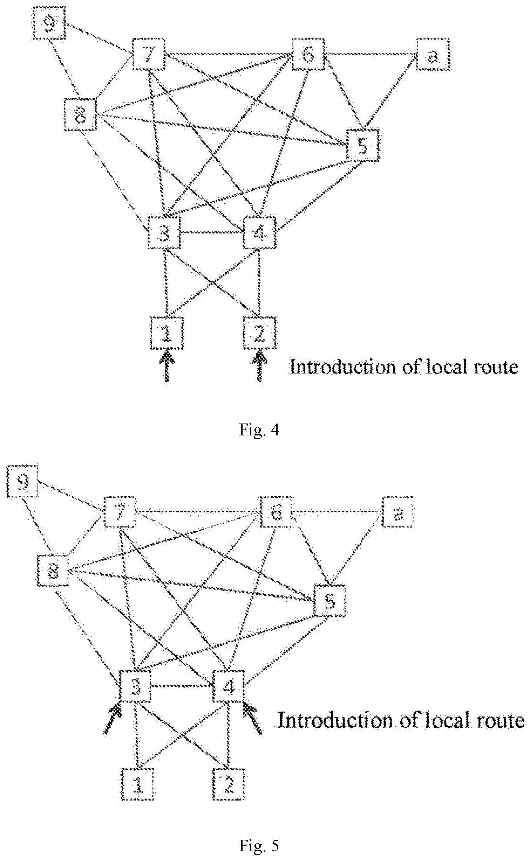

Fig. 4 is a networking diagram of a first example of static network route publishing provided in an embodiment of the present disclosure. As shown in Fig. 4, it is assumed that the requirements for publishing are as follows.

Nodes 3, 4, 5, 6, 7, and 8 are defined as core nodes, and nodes 1, 2, 9, and a are defined as edge nodes. A local route introduced from an edge node is to be published to all core nodes but not to other edge nodes. A local route introduced from a core node is to be published to all other core nodes and an edge node directly neighboring said core node but not to edge nodes not directly neighboring said core node.

Based on the above requirements, the application of the present disclosure is as follows.

Configurations of node level metadata:
Listener nodes of each of nodes 3 and 4 are configured as nodes 1, 2, 5, 6, 7, and 8;
Listener nodes of each of nodes 5 and 6 are configured as nodes a, 3, 4, 7, and 8;
Listener nodes of each of nodes 7 and 8 are configured as nodes 9, 3, 4, 5, and 6;
Listener nodes of each of nodes 1, 2, 9, and a are configured as 3, 4, 5, 6, 7, and 8;
Nodes 3, 4, 5, 6, 7, and 8 are all configured as reflectors;
IP FRR switches of all nodes are turned off;
Upstream nodes of all nodes are not configured; and
Downstream nodes of all nodes are not configured.

### Configuration of service level metadata: maximum hop count: 2

An example is taken in which a local route is introduced from nodes 1 and 2. As shown in Fig. 4, the publishing process is as follows.

In step 11), a network topology is first constructed with PE nodes of an L3VPN being vertexes and with the peer binding relation being edges, as shown in Fig. 4.

In step 12), a breadth-first traversal is first performed starting from node 1 and on the basis of the topology. Nodes 3 and 4 are traversed for the first hop. It is determined that nodes 3 and 4 are listener nodes of node 1, and nodes 3 and 4 are pushed into a traversing result list. It is determined that nodes 3 and 4 are reflectors, the total hop count has not reached the maximum hop count of 2, and the traversal is continued.

In step 13), nodes 4, 5, 6, 7, and 8 are traversed starting from node 3. Since nodes 4, 5, 6, 7, and 8 are all listener nodes of node 1, and each of nodes 4, 5, 6, 7, and 8 and node 3 are upstream and downstream nodes of each other (upstream and downstream nodes of all nodes are not configured), nodes 4, 5, 6, 7, and 8 are pushed into the traversing result list. Since the total hop count has reached the maximum hop count of 2, the traversal is stopped.

In step 14), step 13) is repeated starting from node 4.

In step 15), steps 12) -14) are repeated starting from node 2.

In step 16), the traversing process ends, and network-side routes are generated according to the traversing result as follows.

Node 3 has three upstream nodes: 1, 2, and 4. Two of nodes 1, 2, and 4 with a smaller hop count are selected, and two network-side routes are generated. The next hop is directed to nodes 1 and 2. The active and standby roles are determined based on a hash algorithm, or can be determined based on input of external requests.

Node 4 has three upstream nodes: 1, 2, and 3. Two of nodes 1, 2, and 3 with a smaller hop count are selected, and two network-side routes are generated. The next hop is directed to nodes 1 and 2. The active and standby roles are determined based on the hash algorithm, or can be determined based on input of external requests.

Nodes 5, 6, 7, and 8 each have two upstream nodes: 3 and 4, and therefore two network-side routes are generated on each of the nodes 5, 6, 7, and 8. The next hop is directed to nodes 3 and 4. The active and standby roles are determined based on the hash algorithm, or can be determined on based on input of external requests.

An example is taken in which a local route is introduced from nodes 3 and 4. As shown in Fig. 5, the publishing process is as follows.

In step 21), a traversal is performed based on the same topology as the traversal performed starting from nodes 1 and 2, and the topology does not need to be generated repeatedly.

In step 22), a breadth-first traversal is first performed starting from node 3 and on the basis of the topology. Nodes 1, 2, 4, 5, 6, 7, and 8 are traversed for the first hop. Node 4 is removed for it is not a listener node of node 3, and the remaining nodes 1, 2, 5, 6, 7, and 8 are pushed into the traversing result list.

In step 23), since nodes 1 and 2 are not reflector nodes, there is no need to continue the traversal.

In step 24), since node 5 is a reflector node, the traversal is continued, and nodes 4, 6, 7, 8, and a are traversed. Node a is removed for it is not a listener node of node 3, and the remaining nodes 4, 6, 7, and 8 are pushed into the traversing result list.

In step 25), step 24) is repeated for nodes 6, 7, and 8.

In step 26), the hop count has reached the maximum hop count, and the traversal ends.

In step 27), steps 22)-26) are repeated starting from node 4.

In step 28), the entire traversing process ends, and network-side routes are generated according to the traversing result as follows.

Nodes 1 and 2 each have two upstream nodes: 3 and 4. Two network-side routes are generated, and the next hop is directed to nodes 3 and 4. The active and standby roles are determined according to the hash algorithm, or can be determined based on the input of external requests.

Nodes 3 and 4 are starting nodes and the IP FRR switches thereof are not turned on. Therefore, no network-side routes are generated.

Node 5 has five upstream nodes: 3, 4, 6, 7, and 8. Two of nodes 3, 4, 6, 7, and 8 with the smallest hop count, i.e., nodes 3 and 4 are selected, and two network-side routes are generated. The next hop is directed to nodes 3 and 4. The active and standby roles are determined according to the hash algorithm, or can be determined based on the input of external requests.

Node 6 has five upstream nodes: 3, 4, 5, 7, and 8. Two of nodes 3, 4, 5, 7, and 8 with the smallest hop count, i.e., nodes 3 and 4 are selected, and two network-side routes are generated. The next hop is directed to nodes 3 and 4. The active and standby roles are determined according to the hash algorithm, or can be determined based on the input of external requests.

Node 7 has five upstream nodes: 3, 4, 6, 5, and 8. Two of nodes 3, 4, 6, 5, and 8 with the smallest hop count, i.e., nodes 3 and 4 are selected, and two network-side routes are generated. The next hop is directed to nodes 3 and 4. The active and standby roles are determined according to the hash algorithm, or can be determined based on the input of external requests.

Node 8 has five upstream nodes: 3, 4, 6, 7, and 5. Two of nodes 3, 4, 6, 7, and 5 with the smallest hop count, i.e., nodes 3 and 4 are selected, and two network-side routes are generated. The next hop is directed to nodes 3 and 4. The active and standby roles are determined according to the hash algorithm, or can be determined based on the input of external requests.

According to an embodiment of the present disclosure, there is provided a computer-readable storage medium storing thereon computer executable instructions that, when executed by a processor, implement the method for publishing a network route described above.

The solution provided in the embodiment according to the present disclosure has the following advantages: 1) the publishing range and publishing rules can be precisely controlled, and the solution is applicable to a variety of scenarios, including complex networking scenarios; 2) the algorithm of the software of the publishing engine is unified, which does not need targeted scenario customization. Scenario customization is only present in configuration of metadata. When new scenarios are supported, only the configuration of metadata needs to be changed, and there is no need to upgrade software of the engine. That is, through the configuration of metadata, the publishing rules are customized to more flexibly and quickly adapt to the L3VPN route publishing algorithm in various networking scenarios.

Those of ordinary skill in the art can understand that all or some steps, systems, and functional modules/units in the method disclosed above can be implemented as software, firmware, hardware, and appropriate combinations thereof. In a hardware implementation, the division of functional modules/units mentioned in the above description does not necessarily correspond to the division of physical components. For example, a physical component may have multiple functions, or a function or step may be executed by cooperation of several physical components. Some or all components may be implemented as software executed by a processor, such as a digital signal processor or microprocessor, may be implemented as hardware, or may be implemented as an integrated circuit such as an application specific integrated circuit. Such software may be distributed on computer-readable media, which may include computer storage media (or non-transitory media) and communication media (or transitory media). As is known to those of ordinary skill in the art, the term "computer storage media" includes volatile and nonvolatile media as well as removable and non-removable media implemented in any method or technology for storing information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer. In addition, it is well known to those of ordinary skill in the art that communication media typically embodies computer readable instructions, data structures, program modules, or other data in a modulated data signal such as a carrier wave or other transport mechanism and include any information delivery media.

## Claims

1. A method for publishing a network route, comprising:
traversing (S101) a pre-constructed network topology starting from a local route introductory node in the network and according to a maximum hop count so as to obtain a traversing result list containing traversed listener nodes and reflector nodes; and
according to the traversing result list, generating (S102) a network-side route and publishing the generated network-side route to corresponding nodes in the network;
wherein traversing (S101) a pre-constructed network topology starting from a local route introductory node in the network and according to a maximum hop count so as to obtain a traversing result list containing traversed listener nodes and reflector nodes comprises:
traversing each of network branches of the network topology successively in a hop-by-hop manner, starting from the local route introductory node in the network;
when traversing each of the network branches of the network topology, if it is determined that a traversed node is a listener node of the local route introductory node, recording the traversed node into the traversing result list, and completing traversing according to whether the listener node is a reflector node and whether the maximum hop count is reached; and
when traversing each of the network branches of the network topology, if it is determined that the traversed node is not a listener node of the local route introductory node, stopping traversing.

2. The method according to claim 1, wherein the network topology comprises a plurality of nodes, the plurality of nodes including core nodes and edge nodes.

3. The method according to claim 2, wherein the maximum hop count is configured through service level metadata, listener nodes are configured for each core node and for each edge node through node level metadata, and reflector nodes are configured for each core node through node-level metadata.

4. The method according to claim 1, wherein completing traversing according to whether the listener node is a reflector node and whether the maximum hop count is reached comprises:
determining whether the listener node is a reflector node;
if it is determined that the listener node is a reflector node, continuing traversing starting from the reflector node, and recording traversed listener nodes of the reflector node into the traversing result list until the maximum hop count is reached; and
if it is determined that the listener node is not a reflector node, stopping traversing.

5. The method according to claim 2, wherein publishing the generated network-side route to corresponding nodes in the network comprises:
if the local route introductory node in the network is an edge node, publishing the generated network-side route to all the core nodes in the network; and
if the local route introductory node in the network is a core node, publishing the generated network-side route to all core nodes in the network other than the core node serving as the introductory node and to an edge node directly neighboring the core node serving as the introductory node.

6. A device for publishing a network route, comprising:
a traversing module (201), which is configured to traverse a pre-constructed network topology starting from a local route introductory node in the network and according to a maximum hop count so as to obtain a traversing result list containing traversed listener nodes and reflector nodes; and
a route publishing module (202), which is configured to generate a network-side route according to the traversing result list and to publish the generated network-side route to corresponding nodes in the network;
wherein the traversing module (201) comprises:
a traversing unit, which is configured to traverse each of network branches of the network topology successively in a hop-by-hop manner, starting from the local route introductory node in the network; to record the traversed node into the traversing result list if it is determined that a traversed node is a listener node of the local route introductory node when traversing each of the network branches of the network topology, and complete traversing according to whether the listener node is a reflector node and whether the maximum hop count is reached; and to stop traversing if it is determined that the traversed node is not a listener node of the local route introductory node when traversing each of the network branches of the network topology.

7. The device according to claim 6, wherein the network topology comprises a plurality of nodes, the plurality of nodes including core nodes and edge nodes.

8. The device according to claim 6, wherein the maximum hop count is configured through service level metadata, listener nodes are configured for each core node and for each edge node through node level metadata, and reflector nodes are configured for each core node through node level metadata.

9. A computer readable medium storing thereon computer executable instructions that, when executed by a processor, implement the method according to any one of claims 1-5.

## Patentansprüche

1. Verfahren zur Veröffentlichung einer Netzwerkroute, umfassend:
Durchqueren (S101) einer vorkonstruierten Netzwerktopologie ausgehend von einem lokalen Routeeinleitknoten im Netzwerk und gemäß einer maximalen Hop-Anzahl, um eine Durchquerergebnisliste zu erhalten, die durchquerte Zuhörerknoten und Reflektorknoten enthält; und
gemäß der Durchquerergebnisliste, Erzeugen (S102) einer netzwerkseitigen Route und Veröffentlichen der erzeugten netzwerkseitigen Route an entsprechende Knoten im Netzwerk;
worin das Durchqueren (S101) einer vorkonstruierten Netzwerktopologie ausgehend von einem lokalen Routeeinleitknoten im Netzwerk und gemäß einer maximalen Hop-Anzahl, um eine Durchquerergebnisliste zu erhalten, die durchquerte Zuhörerknoten und Reflektorknoten enthält, umfasst:
Durchqueren jedes von Netzwerkzweigen der Netzwerktopologie nacheinander in einer Hop-by-Hop-Weise, ausgehend von dem lokalen Routeeinleitknoten im Netzwerk;
beim Durchqueren jedes der Netzwerkzweige der Netzwerktopologie, wenn es bestimmt wird, dass ein durchquerter Knoten ein Zuhörerknoten des lokalen Routeeinleitknotens ist, Aufzeichnen des durchquerten Knotens in die Durchquerergebnisliste, und Vollenden des Durchquerens je nachdem, ob der Zuhörerknoten ein Reflektorknoten ist und ob die maximale Hop-Anzahl erreicht wird; und
beim Durchqueren jedes der Netzwerkzweige der Netzwerktopologie, wenn es bestimmt wird, dass der durchquerte Knoten kein Zuhörerknoten des lokalen Routeeinleitknotens ist, Stoppen des Durchquerens.

2. Verfahren nach Anspruch 1, worin die Netzwerktopologie eine Vielzahl von Knoten umfasst, wobei die Vielzahl von Knoten Kernknoten und Randknoten umfasst.

3. Verfahren nach Anspruch 2, worin die maximale Hop-Anzahl durch Dienststufe-Metadaten konfiguriert ist, Zuhörerknoten für jeden Kernknoten und für jeden Randknoten durch Knotenstufe-Metadaten konfiguriert sind, und Reflektorknoten für jeden Kernknoten durch Knotenstufe-Metadaten konfiguriert sind.

4. Verfahren nach Anspruch 1, worin das Vollenden des Durchquerens je nachdem, ob der Zuhörerknoten ein Reflektorknoten ist und ob die maximale Hop-Anzahl erreicht wird, umfasst:
Bestimmen, ob der Zuhörerknoten ein Reflektorknoten ist;
wenn es bestimmt wird, dass der Zuhörerknoten ein Reflektorknoten ist, Weitermachen mit dem Durchqueren ausgehend von dem Reflektorknoten, und Aufzeichnen der durchquerten Zuhörerknoten des Reflektorknotens in die Durchquerergebnisliste, bis die maximale Hop-Anzahl erreicht wird; und
wenn es bestimmt wird, dass der Zuhörerknoten kein Reflektorknoten ist, Stoppen des Durchquerens.

5. Verfahren nach Anspruch 2, worin das Veröffentlichen der erzeugten netzwerkseitigen Route an entsprechende Knoten im Netzwerk umfasst:
wenn der lokale Routeeinleitknoten im Netzwerk ein Randknoten ist, Veröffentlichen der erzeugten netzwerkseitigen Route an alle Kernknoten im Netzwerk; und
wenn der lokale Routeeinleitknoten im Netzwerk ein Kernknoten ist, Veröffentlichen der erzeugten netzwerkseitigen Route an alle Kernknoten im Netzwerk anders als den Kernknoten, der als der Einleitknoten dient, und an einen Randknoten, der dem Kernknoten, der als der Einleitknoten dient, unmittelbar benachbart ist.

6. Vorrichtung zur Veröffentlichung einer Netzwerkroute, umfassend:
ein Durchquermodul (201), das dazu konfiguriert ist, eine vorkonstruierte Netzwerktopologie ausgehend von einem lokalen Routeeinleitknoten im Netzwerk und gemäß einer maximalen Hop-Anzahl zu durchqueren, um eine Durchquerergebnisliste zu erhalten, die durchquerte Zuhörerknoten und Reflektorknoten enthält; und
ein Routeveröffentlichungsmodul (202), das dazu konfiguriert ist, eine netzwerkseitige Route gemäß der Durchquerergebnisliste zu erzeugen und die erzeugte netzwerkseitige Route an entsprechende Knoten im Netzwerk zu veröffentlichen;
worin das Durchquermodul (201) umfasst:
eine Durchquereinheit, die dazu konfiguriert ist, jeden von Netzwerkzweigen der Netzwerktopologie nacheinander in einer Hop-by-Hop-Weise, ausgehend von dem lokalen Routeeinleitknoten im Netzwerk zu durchqueren; den durchquerten Knoten in die Durchquerergebnisliste aufzuzeichnen, wenn es bestimmt wird, dass ein durchquerter Knoten ein Zuhörerknoten des lokalen Routeeinleitknotens beim Durchqueren jedes der Netzwerkzweige der Netzwerktopologie ist, und das Durchqueren je nachdem zu vollenden, ob der Zuhörerknoten ein Reflektorknoten ist und ob die maximale Hop-Anzahl erreicht wird; und das Durchqueren zu stoppen, wenn es bestimmt wird, dass der durchquerte Knoten kein Zuhörerknoten des lokalen Routeeinleitknotens beim Durchqueren jedes der Netzwerkzweige der Netzwerktopologie ist.

7. Vorrichtung nach Anspruch 6, worin die Netzwerktopologie eine Vielzahl von Knoten umfasst, wobei die Vielzahl von Knoten Kernknoten und Randknoten umfasst.

8. Vorrichtung nach Anspruch 6, worin die maximale Hop-Anzahl durch Dienststufe-Metadaten konfiguriert ist, Zuhörerknoten für jeden Kernknoten und für jeden Randknoten durch Knotenstufe-Metadaten konfiguriert sind, und Reflektorknoten für jeden Kernknoten durch Knotenstufe-Metadaten konfiguriert sind.

9. Computerlesbares Medium, auf dem vom Computer ausführbare Anweisungen gespeichert sind, die, wenn sie von einem Prozessor ausgeführt werden, das Verfahren nach einem der Ansprüche 1-5 implementieren.

## Revendications

1. Procédé pour publier un itinéraire de réseau, comprenant :
la traversée (S 101) d'une topologie de réseau préconstruite à partir d'un noeud d'introduction d'itinéraire local dans le réseau et selon un nombre de sauts maximum de manière à obtenir une liste de résultats de traversée contenant des noeuds d'auditeur traversés et des noeuds réflecteurs ; et
en fonction de la liste de résultats de traversée, la génération (S 102) d'un itinéraire côté réseau et la publication de l'itinéraire côté réseau généré vers des noeuds correspondants dans le réseau ;
dans lequel la traversée (S 101) d'une topologie de réseau préconstruite à partir d'un noeud d'introduction d'itinéraire local dans le réseau et selon un nombre de sauts maximum de manière à obtenir une liste de résultats de traversée contenant des noeuds d'auditeur traversés et des noeuds réflecteurs comprend :
la traversée successivement de chacune des branches de réseau de la topologie de réseau de manière saut par saut, à partir du noeud d'introduction d'itinéraire local dans le réseau ;
lors de la traversée de chacune des branches de réseau de la topologie de réseau, s'il est déterminé qu'un noeud traversé est un noeud d'auditeur du noeud d'introduction d'itinéraire local, l'enregistrement du noeud traversé dans la liste de résultats de traversée, et l'achèvement de la traversée selon que le noeud d'auditeur est un noeud réflecteur et que le nombre de sauts maximum est atteint ; et
lors de la traversée de chacune des branches de réseau de la topologie de réseau, s'il est déterminé que le noeud traversé n'est pas un noeud d'auditeur du noeud d'introduction d'itinéraire local, l'arrêt de la traversée.

2. Procédé selon la revendication 1, dans lequel la topologie de réseau comprend une pluralité de noeuds, la pluralité de noeuds incluant des noeuds de noyau et des noeuds périphériques.

3. Procédé selon la revendication 2, dans lequel le nombre de sauts maximum est configuré par l'intermédiaire de métadonnées de niveau de service, des noeuds d'auditeur sont configurés pour chaque noeud central et pour chaque noeud périphérique par l'intermédiaire de métadonnées de niveau de noeud, et des noeuds réflecteurs sont configurés pour chaque noeud central par l'intermédiaire de métadonnées de niveau de noeud.

4. Procédé selon la revendication 1, dans lequel l'achèvement de la traversée selon que le noeud d'auditeur est un noeud réflecteur et que le nombre maximum de sauts est atteint comprend :
la détermination si le noeud d'auditeur est un noeud réflecteur ;
s'il est déterminé que le noeud d'auditeur est un noeud réflecteur, la continuation de la traversée à partir du noeud réflecteur, et l'enregistrement des noeuds d'auditeur traversés du noeud réflecteur dans la liste de résultats de traversée jusqu'à ce que le nombre de sauts maximum soit atteint ; et
s'il est déterminé que le noeud d'auditeur n'est pas un noeud réflecteur, l'arrêt de la traversée.

5. Procédé selon la revendication 2, dans lequel la publication de l'itinéraire côté réseau généré vers des noeuds correspondants dans le réseau comprend :
si le noeud d'introduction d'itinéraire local dans le réseau est un noeud périphérique, la publication de l'itinéraire côté réseau généré vers tous les noeuds centraux dans le réseau ; et
si le noeud d'introduction d'itinéraire local dans le réseau est un noeud central, la publication de l'itinéraire côté réseau généré vers tous les noeuds centraux dans le réseau autres que le noeud central servant de noeud d'introduction et vers un noeud périphérique directement voisin du noeud central servant de noeud d'introduction.

6. Dispositif pour publier un itinéraire de réseau, comprenant :
un module de traversée (201), qui est configuré pour traverser une topologie de réseau préconstruite à partir d'un noeud d'introduction d'itinéraire local dans le réseau et selon un nombre de sauts maximum de manière à obtenir une liste de résultats de traversée contenant des noeuds d'auditeur traversés et des noeuds réflecteurs ; et
un module de publication d'itinéraire (202), qui est configuré pour générer un itinéraire côté réseau selon la liste de résultats de traversée et pour publier l'itinéraire côté réseau généré vers des noeuds correspondants dans le réseau ;
dans lequel le module de traversée (201) comprend :
une unité de traversée, qui est configurée pour traverser successivement chacune des branches de réseau de la topologie de réseau d'une manière saut par saut, en commençant par le noeud d'introduction d'itinéraire local dans le réseau ; pour enregistrer le noeud traversé dans la liste de résultats de traversée s'il est déterminé qu'un noeud traversé est un noeud d'auditeur du noeud d'introduction d'itinéraire local lors de la traversée de chacune des branches de réseau de la topologie de réseau, et pour achever la traversée selon que le noeud d'auditeur est un noeud réflecteur et que le nombre de sauts maximum est atteint ; et pour arrêter la traversée s'il est déterminé que le noeud traversé n'est pas un noeud d'auditeur du noeud d'introduction d'itinéraire local lors de la traversée de chacune des branches de réseau de la topologie de réseau.

7. Dispositif selon la revendication 6, dans lequel la topologie de réseau comprend une pluralité de noeuds, la pluralité de noeuds incluant des noeuds de noyau et des noeuds périphériques.

8. Dispositif selon la revendication 6, dans lequel le nombre de sauts maximum est configuré par l'intermédiaire de métadonnées de niveau de service, des noeuds d'auditeur sont configurés pour chaque noeud central et pour chaque noeud périphérique par l'intermédiaire de métadonnées de niveau de noeud, et des noeuds réflecteurs sont configurés pour chaque noeud central par l'intermédiaire de métadonnées de niveau de noeud.

9. Support lisible par ordinateur stockant sur celui-ci des instructions de programme, qui, lorsqu'elles sont exécutées par un processeur, mettent en oeuvre le procédé selon l'une quelconque des revendications 1 à 5.
